Europäisches Patentamt

European Patent Office

Office européen des brevets

(11) Publication number: **0 015 113**
**B1**

(12) **EUROPEAN PATENT SPECIFICATION**

(45) Date of publication of patent specification: **16.05.84**

(51) Int. Cl.³: **B 29 H 17/16, B 29 H 17/22**

(21) Application number: **80300406.8**

(22) Date of filing: **12.02.80**

(54) **Tire building machine and method.**

(30) Priority: **22.02.79 US 14132**

(43) Date of publication of application:
**03.09.80 Bulletin 80/18**

(45) Publication of the grant of the patent:
**16.05.84 Bulletin 84/20**

(84) Designated Contracting States:
**DE FR GB IT NL**

(56) References cited:
**DE-A-2 516 419**
**DE-A-2 623 830**
**US-A-3 154 455**
**US-A-4 087 306**

(73) Proprietor: **NRM CORPORATION**
**P.O. Box 6338 3200 Gilchrist Road**
**Akron, Ohio 44312 (US)**

(72) Inventor: **Shichman, Daniel**
**4435 Larkdale**
**Stow, Ohio 44224 (US)**
Inventor: **Enders, George E.**
**15100 Salen-Alliance Rd.**
**Salem, Ohio 44460 (US)**

(74) Representative: **Rooney, Paul Blaise et al**
**D.Young & Co. 10 Staple Inn**
**London WC1V 7RD (GB)**

Courier Press, Leamington Spa, England.

## Description

### Field of the Invention

This invention relates generally to a tire building machine and more particularly to a belt or other tire component folding machine having provision for sharply folding tire components along precise fold lines, and a method for folding such components.

### Background of the Invention

In the manufacture of belted tires and more particularly radial tires, it has been found desirable that the breaker or ply belts or the like serving as reinforcement members of tires be constructed with folded edges. This avoids sharp exposed edges. This may be done by folding the breakers or plies sharply on themselves or to wrap around the edge portions of the other contiguous breakers or plies. Hence, the formation of the desired folded edges requires turning the circumferential edge portions of the endless breaker or ply belts along a fold line so that the so turned portions overlie adjacent circumferential portions of the belts. For precision tire making, formation of sharp and precise folds is particularly important. For example, such precise and sharp folding of the belts eliminates the need for subsequent sizing and trimming of the folded belts.

Heretofore, inflatable bags or bladders have been employed in tire building and belt folding machines to fold the breaker or ply belts and to carry out various other turning operations during building of tire components. Reference may be had, for example, to applicants' assignee's U.S. Patent No. 3,438,832, dated April 15, 1969, which discloses a dual bladder construction in a tire building drum for turning a ply about a bead core to form a tire carcass. However, such machine is not designed to fold sharply a breaker or ply belt back upon itself. For examples of belt folding machines that employ inflatable bladders for folding a tire component belt back upon itself, reference may be had to the Nebout U.S. Patent No. 3,154,455, dated October 27, 1964, and Wood et al U.S. Patent No. 3,525,655, dated August 25, 1970. However, to obtain the desired folds, such machines employ rubber decks with vacuum hold downs to hold the belt to the drum and to attempt to define the fold line while the edge thereof is being folded. Unfortunately, such types of belt folding machines using rubber decks with the bladders as a continuation thereof cannot with ensured repeatability obtain a precise fold edge. Rubber is well known for its change in characteristics upon age and repeated use.

In some such prior art constructions employing inflatable bladders, the fold line may be defined solely by the configuration of the bladders. However, such constructions may be undesirable because no precise unyielding fold line is provided to ensure a precise and sharp fold. Moreover, the expansion characteristics of the bladder may vary depending on ambient conditions or the condition of the bladder leading to undesirable fold dimensional variations from one cycle to the next. An exemplary belt folding machine of such prior art constructions is disclosed in Heat et al U.S. Patent No. 4,087,306, dated May 2 1978.

Another known belt folding machine, disclosed in Irie et al U.S. Patent No. 4,063,987, dated December 20, 1977, employs complex indexed folding and wrapping devices for effecting the fold. However, such machine is somewhat complicated in construction and operation.

It is also known to provide tire building and belt folding machines which include radially expandable drum decks, and some such decks are also axially adjustable. For examples of such decks, reference may be had to the following U.S. patents: Burton Patent No. 3,160,545, Appleby et al Patent No. 3,784,437, Jones et al Patent No. 3,740,293 and Gazuit Patent No. 3,647,598.

According to the present invention there is provided a tire building machine for holding the circumferential edge portion of a tire component including an annular deck having a cylindrical support for the component and a sharply shouldered peripheral deck edge, and an inflatable bladder assembly adjacent the deck edge, characterised by said sharply shouldered peripheral deck edge being precisely formed to define a precise fold line along which the circumferential edge portion of the component is folded, and the bladder assembly being positioned radially inwardly of said deck edge, which at least part of the assembly being positioned axially inwardly of said deck edge, for cooperating when inflated with said deck edge, by engaging the underside of the deck adjacent said deck edge and moving around said deck edge, to fold the overhanging circumferential edge portion of the component at such deck edge. The deck edge is defined by a thin end face which forms a sharp shoulder with the adjacent cylindrical work surface of the drum and which is convexly contoured at its radially inner portion to form a gradually curving continuation of the underside of the deck adjacent the deck edge. The bladder assembly as it expands progressively walks up the contoured edge and around the deck edge.

Preferably, dual inflatable bladders are employed at each end of the deck, one bladder being contiguous to the other and arranged on inflation to walk up the contoured underside of the end face of the deck to turn up the overhanging component precisely at the deck edge, and the other arranged on inflation to push the first bladder axially inwardly to fold the same, and thus the component end, around the fold defined by the deck edge to form a sharp and precise fold in the component. The dual bladders may be supported on a cylindrical support and are readily interchangeable as a unit in the belt folding machine as required.

A preferred form of belt folding drum comprises a plurality of deck segments which together define a substantially rigid, cylindrical work surface and which are mounted on a radially expandable and rotatable hub by uniquely shaped inner deck supports, such deck supports providing sufficient radial and axial support for the deck segments while permitting clearance for and access to the various drum components. Such deck segments must be well supported as the bladders when expanded exert substantial axial and radial forces thereagainst.

Each deck segment includes a pair of outer deck sections having interfitting portions which are movable towards and away from each other in precise increments to expand and contract the deck axially. The deck sections are adjustably clamped to their respective deck supports by a center deck section radially coextensive with the interfitting portions of the outer deck sections. In one form of the invention the deck may also include a continuous elastic band which circumscribes the deck segments at the deck edge with the end face of the band flush with the deck end face and having a sharply formed shoulder defining the fold line. Accordingly, a belt folding machine having an axially and radially expandable and contractible deck is provided while still presenting a substantially rigid work surface and having essentially a continuous peripheral edge. Although belts have been successfully folded with significant gaps in the deck edge, spring gap shields at the deck edge may be provided.

Also, importantly, the invention contemplates components which may be readily assembled on existing shafting in belt building machines whereby the latter may be retrofitted. The major components may also readily be disassembled for substitution of components of other size to build different diameter ranges of belts or bands.

Other features of the present invention will become apparent as the following description proceeds.

To the accomplishment of the foregoing and related ends, the invention, then, comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.

Brief Description of the Drawings

In said annexed drawings:

Fig. 1 is a fragmentary front elevation, partially broken away, of a tire building machine in accordance with the present invention;

Fig. 2 is an enlarged fragmentary quarter section of the machine of Fig. 1, taken along the section line 2—2 thereof, illustrating the belt folding drum thereof;

Fig. 3 is a fragmentary radial section of the belt folding drum of Fig. 2, taken along the line 3—3 thereof;

Fig. 4 is an enlarged fragmentary section of the belt folding drum of Fig. 2 illustrating in greater detail the expandable and contractible deck construction;

Fig. 5 is a plan view of a deck segment of the drum of Fig. 4, as seen substantially from the line 5—5 thereof;

Figs. 6—8 are, respectively, section, plan and section views of modified deck constructions illustrating continuous edge forming bands;

Figs. 9A and 9B are fragmentary plan views looking radially inwardly at the drum deck illustrating edge gap shields with the drum contracted and expanded, respectively; and

Figs. 10—13 are fragmentary schematic radial sections illustrating the operation of the tire building drum according to the method of the invention for folding the circumferential end portions of a tire component belt, and more particularly:

Fig. 10 shows the tire component belt and the inflatable bladders of the belt folding drum in a deflated state with the components on the expanded drum and ready for folding;

Fig. 11 shows the turn-up bladder inflated to form a sharp fold in the tire component belt at the fold line defined by the edge of the deck;

Fig. 12 shows the pusher bladder partially inflated to push axially inwardly the turn-up bladder; and

Fig. 13 shows both bladders expanded with the tire component belt edge being completely folded at a precise fold line defined by the edge of the deck.

Description of the Preferred Embodiment

*General Description of the Tire Building Machine*

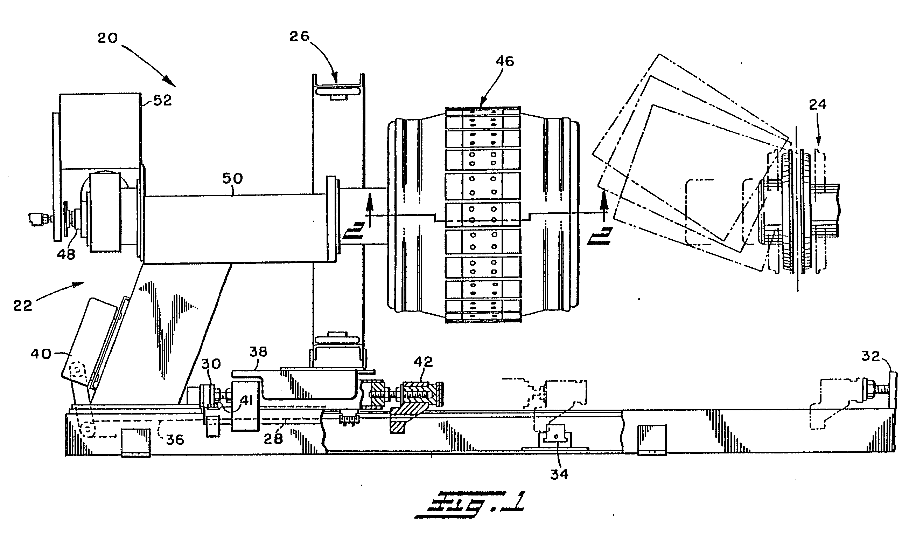

Referring now in greater detail to the drawings and initially to Fig. 1, a tire building machine designated generally by reference numeral 20 comprises a belt and tread forming machine 22 and an in-line second stage or tire carcass shaping machine shown generally at 24. Generally, a belt and tread assembly is made at the machine 22 which is described below in greater detail, the breaker and ply belts generally being formed and folded and the tread subsequently applied to the folded belt. Then, the belt and tread assembly is transferred to the second stage machine 24 for application to a shaped carcass and subsequent stitching.

To facilitate transfer of the fabricated belt and tread assembly from the machine 22 to the second stage machine 24, such machines have their axially extending centerlines aligned along a common axis of the tire building machine 20. A tire component carrier or transfer 26 may be employed to drip and engage the fabricated belt and tread assembly at the center line of the machine 22 and then transfer axially such assembly to the center line of the second stage machine. Rails or guides 28 extending parallel to each other and also parallel to the machine axis support the transfer 26 for such axial movement along the axis of the tire building machine 20. The transfer 26 is moved along the rails 28 between adjustable end stops 30 and 32 and disappearing intermediate stop 34 by means of a chain drive 36 which is received in center slotted housing 38 and is driven by chain drive motor 40. The center slotted housing 38 has suitable adjustable bumpers 41 and 42 which engage the various stops to control precisely the positioning of the transfer 26 relative to the transverse centers of the machines 22 and 24. The transfer in Fig. 1 is retracted to permit the various operations to be carried out by an operator at the machines.

Still referring to Fig. 1, the machine 22 comprises a belt folding drum 46 which is mounted on and rotatable with drive shaft 48. The drive shaft 48 projects in cantilever fashion from a stand or pedestal 50 and, along with the drum 46, is driven for controlled rotation by drum drive 52. The drum 46 is of the type which expands to a set diameter and provides a substantially rigid, cylindrical working surface on which the belt and tread assembly is constructed. The belt or breaker plies which are wrapped around the expanded drum to form an endless band may be supplied from a shuttle servicer, not shown, also driven from the drive 52. After the tread and breaker assembly is constructed, the drum is collapsed to a reduced diameter to permit removal of such assembly by transfer 26.

*Belt Folding Drum (46)*

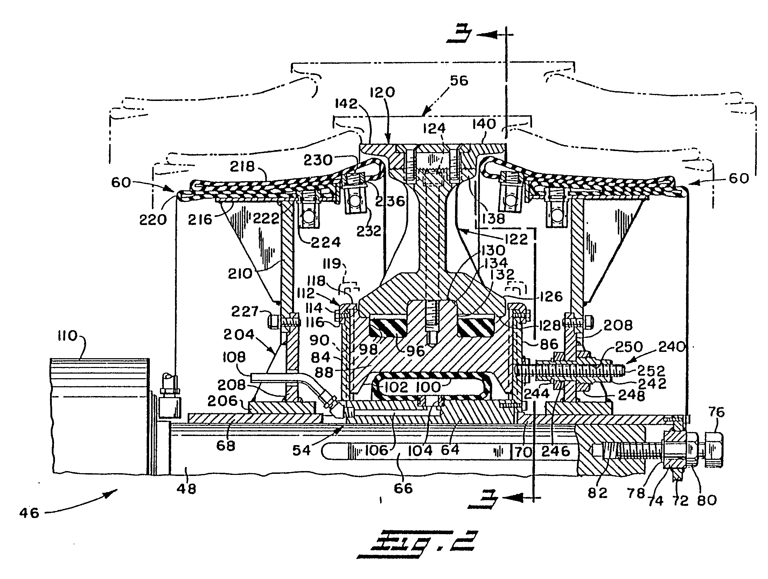

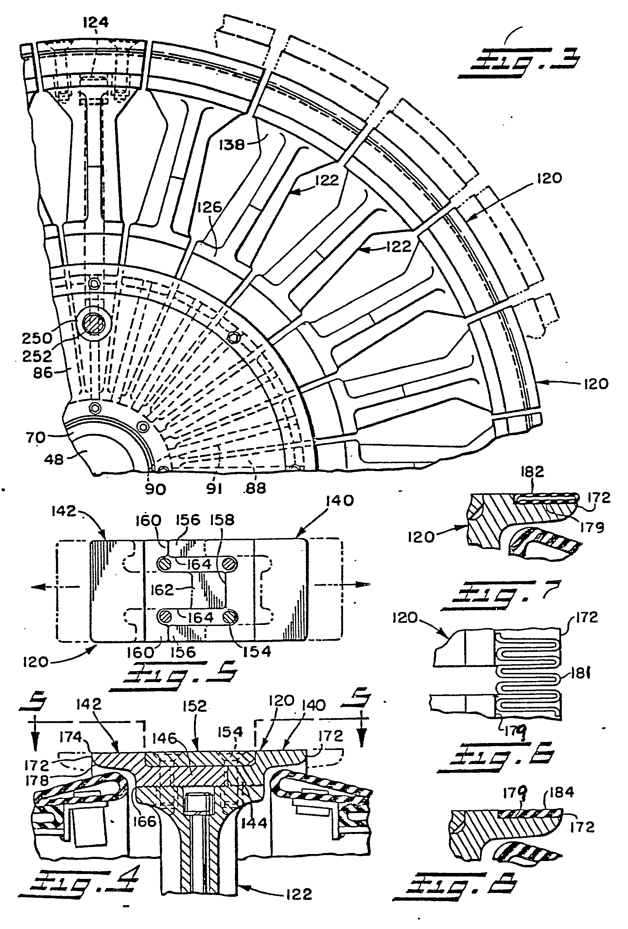

Referring now additionally to Figs. 2 and 3, it can be seen that the major components of the tire belt folding drum 46 are supported in sleevelike fashion on the drive shaft 48 for axial sliding movement therealong to facilitate assembly and disassembly of the drum and to insure that the drum is assembled with proper symmetry and squareness with respect to the transverse center line as well as the axial center line of the machine 22. It will be appreciated that such construction provides for assembly of such components on existing shafting in existing machines whereby the latter may readily be retrofitted.

The drum 46 generally comprises rotating hub assembly 54 to which is secured an expandable central deck 56. Positioned at one or both ends of the deck 56 are dual bladder assemblies 60. The hub assembly 54, deck 56 and dual bladder assemblies 60 are described below in greater detail.

*Rotating Hub Assembly 54*

The rotating hub assembly 54 comprises a drum hub 64 which is keyed to the drive shaft 48 for rotation therewith by hub key 66. The drum hub 64 at its opposite axial ends is secured, respectively, for a follower hub guide or sleeve 68 and an adjustable hub guide or sleeve 70. Such hub guides 68 and 70 ride or slide on the exterior of the drive shaft 48 and are axially adjustable with the hub 64 as a unit. To effect such adjustment, the adjustable hub guide 70 has its axially outer end projecting beyond the end of the shaft 48 and has fastened at such end a circular end plate 72 which has welded therein adjusting cap 74. An adjusting bolt 76 extends through an axial bore in the adjusting cap 74 and is secured for movement therewith by means of retaining ring 78 and jam nut 80. The threaded end of the adjusting bolt 76 is received in threaded axial bore 82 in the distal end of the drive shaft 48 whereby rotation of the adjusting bolt 76 will effect axial positioning of the hub guide 70, and thus the drum hub 64, along the shaft 48. Such construction will sufficiently secure such hub and hub guides to the shaft as well as provide for easy removal of the same. It should now be apparent that existing tire building machines may be easily retrofitted by installing the hub and hub guides on existing shafts.

Welded to each hub guide 68 and 70 are, respectively, radially extending annular guide plates 84 and 86 between which are constrained a plurality of circumferentially arranged expandable and contractible hub sectors 88. Each guide plate 84 and 86 is provided with a plurality of equally circumferentially spaced radial slots in which are press fit guide keys 90. Each guide key 90 also is received and slides in a radial slot 91 in each of the hub sectors 88 and constrains such hub sectors for radial movement. A hub sector 88 corresponds to each radial slot and key 90 in the guide plates 84 and 86 and twenty-four such hub sectors 88 and keys 90 may be provided. However, more or fewer hub sectors 88 may be employed.

The hub sectors 88 are maintained in a radially contacted state against the drum hub 64 by elastic restraining means such as the rubber garter rings or belts 96 received in annular grooves 98 in the radially outer sides of the hub sectors.

Radial expansion of the hub sectors 88 against the biasing or restraining force of the garter rings 96 may be obtained by inflation of annular bladder 100 which surrounds the drum hub 64 and which is accommodated in flared channel 102 in the inside of the hub sectors. The bladder 100 is secured to the drum hub 64 by a suitable fitting 104 through which is supplied fluid under pressure through conduit 106 in the drum hub 64 and supply line 108. The supply line 108 may be connected through rotary seal assembly 110 supported on shaft 48 to a suitable pressure source.

Expansion of the bladder 100 will effect uniform outward movement of the hub sectors 88. When the pressure in the bladder is relieved, the garter belts 96 will uniformly retract the hub sectors thereby collapsing the bladder 100.

To control precisely and accurately the expansion of the hub sectors 88, and thus the deck 56 as will be better appreciated below, annular stop rings 112 of L-shape cross-section are secured by suitable fasteners 114 through their radially inwardly extending legs 116 to the guide plates 84 and 86. The axially inwardly extending legs 118 of the rings extend inwardly beyond the guide plates into the path of the hub sectors to limit travel thereof beyond a preset or desired radius as best seen in such expanded state in Fig. 2. Such radial expansion of the hub sectors 84 may easily be adjusted by replacing the rings 112 with rings having a different stop surface I.D. as seen by the phantom position 119 in Fig. 2.

*Deck 56*

Still referring to Figs. 2 and 3, the deck 56 comprises a plurality of deck segments 120 which together cooperate to define a cylindrical belt building surface. Each segment 120 is connected to a respective hub sector 88 for radial expansion and contraction of the deck by a radially extending inner deck support column or spoke 122. Each deck support column is secured to the respective hub sector by a recessed elongated cap screw 124 which extends radially the length of the deck support column and is received in a threaded bore in the hub sector. The radially inner end or base of the support column 122 includes oppositely axially extending tapered feet 126 which are received in annular grooves 128 in the hub sectors axially outwardly of the garter ring grooves 98. The inner deck support column at such radially inner end also includes circumferentially extending symmetrical wedge slot 130 which receives therein a central symmetrical wedge tongue 132 which projects radially outwardly from the hub sector intermediate the garter ring grooves 98. Each tongue and slot includes a design clearance between the outer end of the tongue and the inner end of the slot so that as the fastener is tightened only the side walls of the tongue and slot support and center the column, together with, if course, the head of the fastener 124, and the feet 126. Such cooperating feet and groove and slot and tongue provide for accurate centering and rigid support for the deck support column when secured to the hub sector. To facilitate assembly, the radially outer edges of the tongue may be chamfered to provide pilot surfaces 134. As only a single fastener 124 is needed to secure each deck support column to its respective hub sector, replacement of the deck support columns with different sizes of support columns to manufacture tire components of different sizes is greatly facilitated.

It should be appreciated that the deck support columns 122 are of an "I" configuration in radial section and essentially have a tapering profile. The outwardly extending tapered feet 126 provide a broad base support and an outwardly tapered radially outer column head 138 provides sufficient support for the deck segments 120. The radially intermediate portion or stem of each deck support column through which the tension fastener extends is of reduced dimension to provide sufficient clearance for and access to the various drum components.

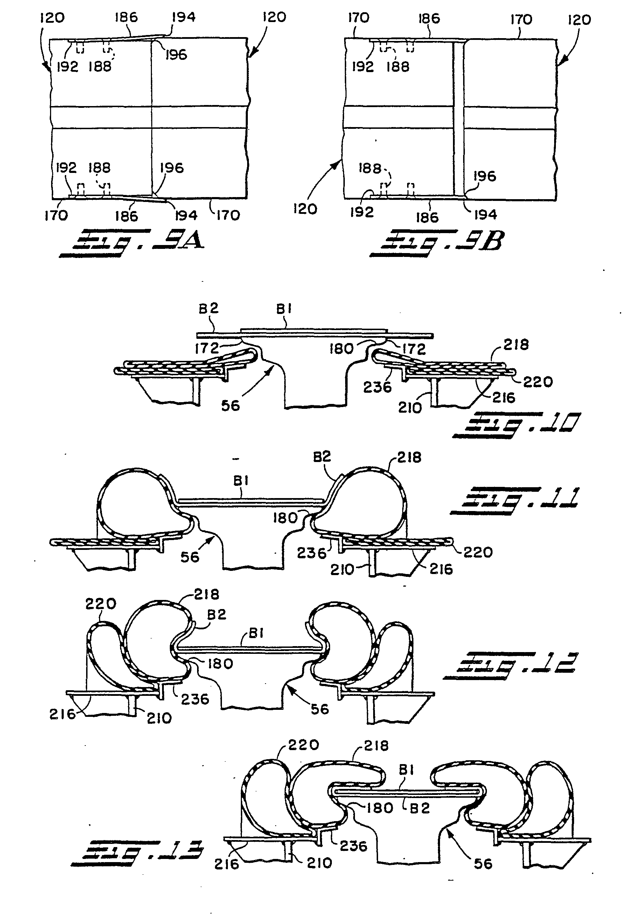

Referring now additionally to Figs. 4 and 5, each deck segment 120 has secured to the head thereof a pair of outer deck sections 140 and 142 having interfitting radially inner portions 144 and 146 which are relieved at their radially outer sides, respectively, to accommodate a center deck section or clamp 152 which is secured to the head of deck support column 122 by the four fasteners 154 and which serve to clamp the outer deck sections at their coextensive inner portions to the head of deck support column 122.

The deck sections 140 and 142 include interfitting elements which are circumferentially spaced so that the deck sections can be moved axially towards and away from each other to enlarge and contract the deck axially while maintaining at least a portion thereof coextensive with the inner deck section head for clamping purposes. For example, the outer deck section 140 includes outer elongate fingers 156 and short intermediate tongue 158 while the other outer deck section 142 may include, respectively circumferentially spaced, short outer fingers 160 and elongage tongue portion 162. Such tongue portions are suitably circumferentially spaced apart from the finger portions to define when the deck sections are coextensive axially extending slots 164 to accommodate the fasteners 154 to permit such axial width adjustment such as between the positions shown in solid and phantom lines in Figs. 4 and 5.

To ensure a positive clamping action and to prevent axial movement of the outer deck sections 140 and 142 when clamped, the interfacing surfaces of the deck sections and deck support columns 122 are suitably serrated transversely of the drum axis for mating engagement as shown at 166. By loosening or removing the fasteners 154, the outer deck sections 140 and 142 may be axially expanded or contracted as required. The fasteners 146 may then be tightened and the mating serrated surfaces of the deck sections and deck suport column 120 serve to lock securely the outer deck sections in such adjusted position. Such serrations may have a pitch of approximately 0.050 inches (.13 cm) to provide a fine incremental axial width adjustment for the drum surface. Any circumferential gap at the edges of the clamp 152 may be filled with a rubber band of the required width.

Still referring to Figs. 4 and 5, the axial ends of each deck segment 120 are precisely formed and contoured to define together a precise peripheral deck edge for the drum. The edge of each deck segment is defined by a narrow radially extending end face 172 which forms a sharp shoulder with the adjacent deck work surface as shown at 174. Preferably, the end face extends at about a normal angle to the deck work surface at such surface. The radially inner portion of the deck end face is continuously convexly contoured or curved as shown at 178 from the sharp edge to form a gradually curving continuation of the underside 180 of the deck segment adjacent the deck edge.

For most component materials and in most situations, the gaps between the drum segments in the expanded condition can be tolerated and a precise edge fold may still be formed not showing any irregularity due to the slight gap. Depending upon the stiffness of the material being folded, it has been found that significant gaps may be tolerated. The stiffer the material the larger the gap that can be tolerated. For example, for stiffer materials, gaps of up to 3/4 inch (1.9 cm) can be tolerated without showing fold irregularities. However, in some situations it may be desirable to have a continuous deck edge.

Referring now to Figs. 6—8, the deck segments 120 adjacent their end faces 172 optionally may be circumscribed by slightly elastic gap spanning bands. The deck segments adjacent their edges are recessed at 179 to accommodate such elastic bands with the radially outer surfaces of the bands being flush with the deck surface and forming a continuation thereof. In Fig. 6, the band is seen to comprise a serpentine spring wire formed band 181 of the type shown. Preferably, the spring wire band 181 is molded in an annular hollow rubber cover 182 as shown in Fig. 7 to provide a more continuous as well as substantially rigid peripheral edge. In Fig. 8, a solid hard rubber band 184 is employed. In either case, the elastic bands provide a continuous edge spanning the gaps between adjacent deck segments when expanded which facilitates sharp and precise folding of the component belts in the below described manner.

With reference to Figs. 9A and 9B, the deck segments 120 may also be provided with edge gap shields 186 which bridge the gap between adjacent deck segments and which provide a continuous deck edge. Each deck segment at its end face 170 has affixed, as by screws 188, the edge gap shields 186 which are in the form of thin flat strips and which slidingly overlap and engage the end face 170 of the respectively adjacent deck segment. Preferably, the end face is recessed as at 192 the thickness of the gap shield 186 so that the same is flush with the adjacent end face. The distal end 194 of the gap shield 186 is tapered as is the corner edge 196 of the adjacent deck segment and is of such a length that when the deck is expanded, the tapered end of the gap shield will interfit with the tapered corner edge of the adjacent deck segment thus presenting a flush, continuous deck end face as seen in Fig. 9B. Upon contraction of the deck, the interfitting tapered end and corner edge will cause the gap shield at its distal end to be cammed axially outwardly and then slide along the end face of the adjacent deck segment to the position seen in Fig. 9A.

### Dual Bladder Turn-Up Assemblies (60 and 62)

Reverting to Fig. 2, the other major components of the drum assembly in addition to the hub assembly 54 and center deck 56 are the dual bladder assemblies 60. Each such assembly 60 comprises adjusting brackets 204 including cylindrical sleeves 206 which ride or slide on the exterior of the hub guides 64 and 66, respectively. Welded to each sleeve are annular radial flanges 208 which have secured thereto annular plates 210 by means of fasteners 227. Such annular plates 210 are welded to the interior of cylindrical bladder support cans 216 which each support radially outer and inner annular inflatable bladders 218 and 220, respectively. When deflated as seen in Fig. 2, the outer bladder 218 lays over the inner bladder 220 and both are supported in such condition in a cylindrical fashion by the cylindrical can 216.

The inner or pusher bladder 220 may be contour molded annularly and a stem indicated at 222 may be included in the molding process. A fitting 224 is connected to the stem for inflation of the inner bladder. The stem may extend through the can 216 and may assist in locating and assembling the bladder. The outer or push-up bladder 218 also may be contour molded annularly and a stem indicated at 230 may be included in the molding process. A fitting 232 is connected to the stem for inflation of the inner bladder. The stem may extend through radially outwardlly and axially inwardly stepped can extension 236. It will be appreciated that the stepped can extension is radially outwardly spaced from the can such that the thickness of the inner bladder is accommodated so that the outer bladder will lay substantially flat on the inner bladder. At least part of the outer bladder is also slightly axially inwardly centered relative to the inner bladder and deck edge. Inflation of the inner and outer bladders may be accomplished by means of suitable supply lines which may be connected through rotary seal 110 to a source of pressurized fluid for controlled inflation of the bladders.

The bladder assemblies 60 which are axially slidable along the hub guides may be axially constrained by means of the adjusting assembly 240 shown at the right in Figure 2. Although such adjusting assembly is provided for both bladder assemblies and preferably there are two such assemblies for each bladder assembly positioned diametrically opposite one another, only one such assembly is shown and described below.

Such adjusting assembly 240 comprises an adjusting screw 242 which extends through an opening in the annular flange 208 of the adjusting bracket 204 and is secured therein for free rotation by retaining ring 244, spacer 246 and jam nut 248. The adjusting screw has a threaded internal bore 240 extending the length thereof which threadedly receives threaded rod 250 which is secured at its inner end to the guide plate 82 and is fixed thereto against rotation. Accordingly, rotation of the adjusting screw will cause the same to move inwardly or outwardly along the threaded rod thus adjusting the axial position of the bladder assemblies 60.

In accordance with the invention, the bladder assemblies 60 normally will be positioned such that the outer bladder 218 is radially and at least part axially inboard of the contoured end face 172 of the deck as best seen in Figs. 2 and 4. When so positioned, the inner bladder will preferably be positioned outwardly of the end face 172 of such deck. With the outer bladder so positioned, it has been found upon expansion of such bladder that the same will conform to the curved end face of the deck and provide a precise and sharp bend thereat with the deck edge precisely defining the belt fold line.

*Operation*

With reference to schematic Figs. 10—13, the sequential steps which may be employed to form a breaker belt or other tire component having desired folded edges are shown. Initially, the operator will expand the deck 56 to its set diameter and apply the plies to the deck from a servicer. The operator will form such plies into belts and such belts may be stitched as necessary. There may be provided, for example, two such belts B1 and B2 with the outer belt B1 having an axial width substantially equal or slighly less than that of the deck. The inner belt B2 may extend axially of the drum in overhanging fashion at both sides thereof. Although only two belt plies are shown of the noted sizes, it will be appreciated that, other arrangements may be provided. For example, there may be only one belt or more than two belts as required for the particular tire building operation being performed. Moreover, the folded portions of the belts may be overlapped requiring first folding of one edge and then the other edge.

At this point after the belt plies have been formed on the expanded deck 56, the outer bladder 218 may be inflated. As the outer bladder is expanded, the same will tend to assume a circular shape on the centerline of its fitting. In so doing, the outer bladder will expand and walk up against the underside 180 and contoured end face 172 of the deck and fold around the deck edge carrying the overhanging ply with it to the extent possible defining a precise fold line at such drum edge as seen in Fig. 11. Subsequently or simultaneously, the inner bladder 220 may be inflated and it also would tend to come to a circular shape on the centerline of its fitting. In so doing, the inner bladder will confront the outer bladder and will tend to urge the same axially inwardly to the crescent shape shown in Fig. 12. It can be seen that the radially inner bladder is of such a shape that it will project beyond the plane of the deck thus to urge the other bladder axially inwardly to the position seen in Fig. 13. The outer bladder at this point will complete folding the edge of the inner belt B2 over the edge of the outer belt B1 to form a folded belt assembly having sharply and precisely folded edges.

After completion of the fold, the bladders may be deflated and additional operations may be done such as applying the tread to the folded breaker belt. Upon completion of the building operation, the deck may be collapsed and the tread and breaker assembly removed by transfer 26 to the shaper assembly for subsequent operations on the tire carcass.

It should be appreciated that the bladders exert substantial force against the deck segments, and if only one bladder assembly 60 is inflated, substantial axial forces are resisted by applicant's uniquely shaped deck support columns which provide the required support while permitting sufficient clearance and access to the various components.

Although the operation is principally described in connection with a two ply breaker with the opposite side edge portions of the inner breaker ply folded inwardly with the folded back widths smaller than the center widths of the breaker, other types of breaker layers may be formed. For example, larger bladders may be employed to fold the edges of an inner breaker over a width greater than half the entire width of the breaker whereby one folded over portion of the inner belt overlaps the other completely enclosing the outer belt.

**Claims**

1. A tire building machine for folding the circumferential edge portion of a tire component including an annular deck (56) having a cylindrical support surface for the component and a sharply shouldered peripheral deck edge (174), and an inflatable bladder assembly (60) adjacent the deck edge, characterized by said sharply shouldered peripheral deck edge (174) being precisely formed to define a precise fold line along which the circumferential edge portion of the component is folded, and the bladder assembly (60) being positioned radially inwardly of said deck edge (174) with at least part of the assembly (60) being positioned axially inwardly of said deck edge (174), for cooperating when inflated with said deck edge (174), by engaging the underside of the deck (56) adjacent said deck edge (174) and moving around said deck edge, to fold the overhanging circumferential edge portion of the component at such deck edge.

2. The machine of claim 1, wherein the underside of said deck (56) adjacent said deck edge (174) in convexly contoured at its radially inner portion to form a gradually curving continuation of the underside of the deck (56) adjacent the deck edge (174), and said bladder assembly (60) as it expands progressively walks up said contoured edge and around said deck edge.

3. The machine of claim 1, comprising means (220) in the form of a second inflatable bladder for urging said bladder assembly (60) axially inwardly over said cylindrical support surface.

4. The machine of claim 3, wherein said second bladder is mounted on a cylindrical support (216) radially inwardly of said first bladder.

5. The machine of claim 4, wherein said deck (56) is mounted on a rotatable shaft (48) and said cylindrical support (216) is mounted on said shaft (48) for axial adjustment.

6. The machine of claim 1, wherein said deck (56) is comprised of a plurality of radially expansible and collapsible segments (120) which together define said cylindrical support surface.

7. The machine of claim 6, including gaps up to 1.9 cm between said segments (120) when expanded.

8. The machine of claim 6, wherein each segment (120) includes axially adjustable edge portions (140, 142) to vary the axial width of the deck (56).

9. The machine of claim 8, including closely spaced cooperating circumferential serrations (166) by means of which said edge portions (140, 142) are adjustably clamped to obtain such axial variations.

10. The machine of claim 9, wherein each segment (120) includes a center portion (152) by means of which said edge portions (140, 142) are thus adjustably clamped to obtain such axial width variations.

11. A method for folding a tire component comprising the steps of:

(a) arranging the component around a cylindrical deck (56) having a sharply shouldered peripheral deck edge (174) with a cylindrical edge portion of the component extending axially outwardly beyond such peripheral edge (174) of the deck (56).

(b) locating an annular inflatable bladder assembly (60) radially inwardly of the deck edge (174) with at lwast part of the bladder assembly being positioned axially inwardly of the deck edge (174), and

(c) expanding the bladder assembly (60) to fold the cylindrical edge portion of the component along a fold line defined by the deck edge (174), and causing the bladder assembly to move axially inwardly to fold the cylindrical edge portion of the component axially inwardly along such fold line to overlie the adjacent circumferential portion of the component, the bladder assembly (60) when expanding walking along the underside of the deck (56) adjacent the deck edge (174) and around such deck edge to effect folding of the component edge portion at the deck edge (174).

## Revendications

1. Machine à fabriquer les pneumatiques pour le pliage de la partie marginale périphérique d'un élément de pneumatique comportant une plate-forme annulaire (56) ayant une surface cylindrique de support de l'élément et un bord de plate-forme périphérique à épaulement marqué (174) et un montage de vessie gonflable (60) contigu au bord de plate-forme, caractérisée en ce que ledit bord de plate-forme périphérique à épaulement marqué (174) est façonné avec précision pour définir une ligne de pli précise suivant laquelle la partie marginale périphérique de l'élément est pliée, et le montage de vessie (60) est disposé radialement à l'intérieur dudit bord de plate-forme (174) une partie au moins du montage (60) étant disposée axialement à l'intérieur dudit bord de plate-forme (174) pour coopérer lorsqu'il est gonflé avec ledit bord de plate-forme (174), en portant contre le dessous de la plate-forme (56) prés dudit bord de plate-forme (174) et en se déplaçant autour de ce bord de plate-forme, pour plier la partie marginale périphérique surplombante de l'élément au niveau de ce bord de plate-forme.

2. Machine selon la revendication 1, caractérisée en ce que le dessous de ladite plate-forme (56) a prés dudit bord de plate-forme (174) un profil convexe dans sa partie radialement intérieure pour former un prolongement à courbure progressive du dessous de la plate-forme (56) prés du bord de plate-forme (174), et ledit montage de vessie (60) venant pendant son expansion gravir progressivement ledit bord profilé et contourner ledit bord de plate-forme.

3. Machine selon la revendication 1, caractérisée en ce qu'elle comprend un moyen (220) sous la forme d'une seconde vessie gonflable pour presser ledit montage de vessie (60) axialement vers l'intérieur en lui faisant franchir ladite surface de support cylindrique.

4. Machine selon la revendication 3, caractérisée en ce que ladite seconde vessie est montée sur un support cylindrique (216) situé radialement à l'intérieur par rapport à ladite première vessie.

5. Machine selon la revendication 4, caractérisée en ce que ladite plate-forme (56) est montée sur un arbre (48) et ledit support cylindrique (216) est monté sur ledit arbre (48) pour régale axial.

6. Machine selon la revendication 1, caractérisée en ce que ladite plate-forme (56) est composée d'une pluralité de segments extensibles et rétractables radialement (120) qui définissent ensemble ladite surface de support cylindrique.

7. Machine selon la revendication 6, caractérisée en ce qu'elle comporte des brèches pouvant atteindre 1,9 cm entre lesdits segments (120) à l'état d'extension.

8. Machine selon la revendication 6 caractérisée en ce que chaque segment (120) comporte des parties marginales (140, 142), réglables axialement pour faire varier la largeur axiale de la plate-forme (56).

9. Machine selon la revendication 8, caractérisée en ce qu'elle comporte des dentelures périphériques coopérantes faiblement espacées (166) au moyen desquelles lesdites parties marginales (140, 142) sont cramponnées de manière réglable pour obtenir de telles variations axiales.

10. Machine selon la revendication 9, caractérisée en ce que chaque segment (120) comporte une partie médiane (152) au moyen de laquelle lesdites parties marginales (140, 142) sont ainsi cramponnées de manière réglable pour obtenir de telles variations de largeur axiale.

11. Procédé de pliage d'un élément de pneumatique caractérisé en ce qu'il comprend les opérations consistant à:

(a) disposer l'élément autour d'une plate-forme cylindrique (56) ayant un bord de plate-forme périphérique (174) à épaulement marqué avec dépassement axial vers l'extérieur d'une partie marginale cylindrique de l'élément au-delà de ce bord périphérique (174) de la plate-forme (56),

(b) mettre en place un montage de vessie gonflable annulaire (60) radialement à l'intérieur du bord de plate-forme (174) avec disposition d'une partie au moins du montage de vessie axialement à l'intérieur du bord de plate-forme (174), et

(c) dilater le montage de vessie (60) pour plier la partie marginale cylindrique de l'élément suivant une ligne de pli définie par le bord de plate-forme (174), et amener le montage de vessie à se déplacer axialement vers l'intérieur suivant cette ligne de pli pour se superposer à la partie périphérique adjacente de l'élément, le montage de vessie (60) venant lors de son expansion longer le dessous de la plate-forme (56) près du bord de plate-forme (174) et contourner ce bord de plate-forme pour effectuer le pliage de la partie marginale de l'élément au niveau du bord de plate-forme (174).

**Patentansprüche**

1. Reifen-Aufbaumaschine zum Falten des Umfangsrandbereiches eines Reifenbestandteiles, beinhaltend ein ringförmiges Tragdeck (56) mit einer zylindrischen Tragfläche für den Reifenbestandteil und einer scharf geschulterten Umfangs-Tragdeckkante (174), und mit einer aufblasbaren Blasenanordnung (60) benachbart der Tragdeckkante, dadurch gekennzeichnet, daß die genannte scharf geschulterte Umfangs-Tragdeckkante (174) so präzis geformt ist, daß sie eine präzise Faltkante definiert, längs der der Umfangseckbereich des Reifenbestandteiles gefaltet wird und die Blasenanordnung (60) radial nach innen zu der genannten Tragflächenkante (174) mit mindestens einem Teil der Blasenanordnung (60) axial innen liegend zu der genannten Tragflächenkante (174) angeordnet ist, um beim Aufblasen mit der genannten Tragdeckkante (174) dadurch zusammenzuwirken, daß die Unterseite des Tragdeckes (56) benachbart der genannten Tragdeckkante (174) beaufschlagt wird und eine Bewegung um die genannte Tragdeckkante herum erfolgt, um den überhängenden Umfansrandbereich des Reifenbestandteiles an dieser Tragdeckkante zu falten.

2. Maschine nach Anspruch 1, bei der die Unterseite des genannten Tragdeckes (56) benachbart der genannten Tragdeckkante (174) am ihrem radialen inneren Bereich konvex konturiert ist, um eine graduell kurvenförmige Fortsetzung der Unterseite des Tragdeckes (56) benachbart der Tragdeckkante (174) zu bilden, wobei die genannte Blasenanordnung (60) bei ihrer Expansion progressiv den genannten konturierten Bereich und um die genannte Tragdeckkante herum hochwandert.

3. Maschine nach Anspruch 1, beinhaltend Mittel (220) in Form einer zweiten aufblasbaren Blase, um die genannte Blasenanordnung (60) axial nach innen über die genannte zylindrische Tragfläche zu drücken.

4. Maschine nach Anspruch 3, bei der die genannte zweite Blase auf einem zylindrischen Support (260) radial innen liegend zu der genannten ersten Blase montiert ist.

5. Maschine nach Anspruch 4, bei der das genannte Tragdeck (56) auf einer drehbaren Welle (48) montiert ist und der genannte zylindrische Support (216) axial einstellbar auf dieser Welle (48) montiert ist.

6. Maschine nach Anspruch 1, bei der das genannte Tragdeck (56) aus einer Mehrzahl radial expandierbarer und rückfahrbarer Segmente (120) gebildet ist, die zusammen die genannte zylindrische Tragfläche definieren.

7. Maschine nach Anspruch 6, beinhalten Spalte von bis zu 1,9 cm zwischen den Segmenten (120), wenn diese expandiert sind.

8. Maschine nach Anspruch 6, bei der jedes Segment (120) axial einstellbare Randstücke (140, 142) beinhaltet, um die axiale Breite des Tragdecks (56) zu variieren.

9. Maschine nach Anspruch 8, beinhaltend eng abständige, ineinander eingreifende, am Umfang verlaufende Verzahnungen (166), durch die die genannten Randstücke (140, 142) einstellbar festgeklemmt sind, um diese axialen Variationen zu erhalten.

10. Maschine nach Anspruch 9, bei der jedes Segment (120) ein Mittelstück (152) beinhaltet, mit dem die genannten Randstücke (140, 142) so einstellbar verklemmt sind, daß man diese axiale Breitenvariation erhält.

11. Verfahren zum Falten eines Reifenbestandteiles, geinahltend die Verfahrensschritte:

(a) das Anorden des Reifenbestandteiles um ein zylindrisches Tragdeck (56) mit einer scharf geschulterten Umfangs-Tragdeckkante (174) so, daß der zylindrische Randbereich des Reifenbestandteiles sich axial nach außen über die Umfangskante (174) des Tragdeckes (56) erstreckt.

(b) das Anordnen einer ringförmigen, aufblasbaren Blasenanordnung (60) radial innen liegend zu der Tragdeckkante (174) so, daß mindestens ein Teil der Blasenanordnung axial innen zu der Tragdeckkante (174) liegt, und

(c) das Expandieren der Blasenanordnung (60), um den zylindrischen Randbereich des Reifenbestandteiles längs einer von der Tragdeckkante (174) definierten Faltlinie zu falten, wobei man die Blasenanordnung dazu bringt, sich axial nach innen zu bewegen, um den zylindrischen Randbereich des Reifenbestandteiles axial nach innen längs dieser Faltkante zu falten so, daß er dann über dem angrenzenden Umfangsbereich des Reifenbestandteiles liegt, wobei die Blasenanordnung (60) bei ihrer Expansion längs der Unterseite des Tragdeckes (56) benachbart der Tragdeckkante (174) sowie um diese Tragdeckkante herum wandert, um das Falten des Randbereiches des Reifenbestandteiles an der Tragdeckkante (174) zu bewirken.

0015113

Fig. 1.

Fig. 2

Fig.3

Fig.5

Fig.4

Fig.7

Fig.6

Fig.8

Fig. 9A

Fig. 9B

Fig. 10

Fig. 11

Fig. 12

Fig. 13